Europäisches Patentamt

European Patent Office

Office européen des brevets

(11) Numéro de publication: **0 289 883 B1**

# (12) FASCICULE DE BREVET EUROPEEN

(45) Date de publication de fascicule du brevet:
04.09.91

(21) Numéro de dépôt: 88106464.6

(22) Date de dépôt: 22.04.88

(51) Int. Cl.⁵: **B60C 23/04**, H01R 35/00

(54) **Support destiné à monter sur la jante un élément utilisé pour la surveillance des pneumatiques.**

(30) Priorité: 07.05.87 FR 8706546

(43) Date de publication de la demande:
09.11.88 Bulletin 88/45

(45) Mention de la délivrance du brevet:
04.09.91 Bulletin 91/36

(84) Etats contractants désignés:
AT BE CH DE ES FR GB GR IT LI LU NL SE

(56) Documents cités:
WO-A-87/00127
WO-A-87/00129
DE-A- 3 243 854
FR-A- 1 507 705
FR-A- 2 177 947

(73) Titulaire: COMPAGNIE GENERALE DES ETA-
BLISSEMENTS MICHELIN-MICHELIN & CIE
4, rue du Terrail
F-63000 Clermont-Ferrand(FR)

(72) Inventeur: Hebert, Jacques
52, rue du Docteur Kurzenne
F-78350 Jouy-en-Josas(FR)
Inventeur: Pauc, Gilbert
10, rue d'Arverne
F-63118 Cebazat(FR)

(74) Mandataire: Bauvir, Jacques et al
Michelin & Cie Service K. Brevets
F-63040 Clermont-Ferrand Cédex(FR)

Rank Xerox (UK) Business Services

## Description

La présente invention concerne la surveillance des pneumatiques. En particulier, elle se rapporte à un support destiné à fixer sur une jante certains des éléments nécessaires à ladite surveillance.

Dans la plupart des dispositifs de surveillance de pneumatique, on trouve un ou plusieurs capteurs, éventuellement associés à des composants électroniques, plongeant dans l'enceinte pneumatique proprement dite, pour être sensibles à la pression régnant à l'intérieur de l'enceinte, et/ou à d'autres paramètres tels que la température. Dans la présente demande, on désignera en général ce capteur et/ou ces composants par "élément électrique". On trouve également, à l'extérieur de l'enceinte du pneumatique, des moyens pour assurer la liaison avec le véhicule, par exemple une bobine si on utilise le couplage inductif, ou bien tout autre moyen approprié. Un support selon le préambule de la revendication 1 est connu, par exemple, du document FR-A-2177947.

Il faut réaliser des connexions électriques entre cet élément électrique et les moyens de couplage. Tout en maintenant l'élément électrique bien immobile par rapport à la jante, il faut réaliser une bonne isolation thermique de l'élément électrique. Il faut encore procurer une connexion électrique fiable avec les lignes électriques rejoignant les moyens de couplage ; ceci impose le plus souvent le recours à la soudure. Ledit élément électrique contient, de façon miniaturisée, tous les éléments électriques et/ou électroniques nécessaires et ne pourrait pas, à aucun moment du montage, supporter de trop hautes températures, ou un apport de calories trop intense. L'invention a pour objectif de proposer un support qui puisse concilier les différents impératifs exposés, et qui puisse recevoir ledit élément électrique préparé séparément.

Le support selon l'invention, destiné à recevoir un élément électrique comportant un ou plusieurs capteurs destinés à surveiller l'état d'un pneumatique, et à maintenir ledit élément électrique sur la jante en assurant l'étanchéité, l'isolation électrique et thermique par rapport à ladite jante, ledit support comportant au moins deux lignes électriques de connexion vers des moyens de couplage situés à l'extérieur de l'enceinte pneumatique, est caractérisé en ce que, pour chaque ligne électrique :

- il est prévu une longueur de fil électrique suffisante pour effectuer une connexion entre ledit fil électrique et un pôle dudit élément électrique lorsque ledit élément électrique et le support sont écartés,
- ledit support comporte un évidement dans lequel se loge spontanément la longueur de fil électrique excédentaire lorsque ledit élément électrique est amené en position de montage sur ledit support.

Les figures suivantes illustrent l'invention et permettent d'en comprendre tous les avantages :

- la figure 1 montre le support selon l'invention, l'élément électrique de surveillance du pneumatique et l'antenne de couplage implantés sur une jante.
- La figure 2 est une coupe du support.
- La figure 3 montre la position relative du support et de l'élément électrique à un stade du montage.

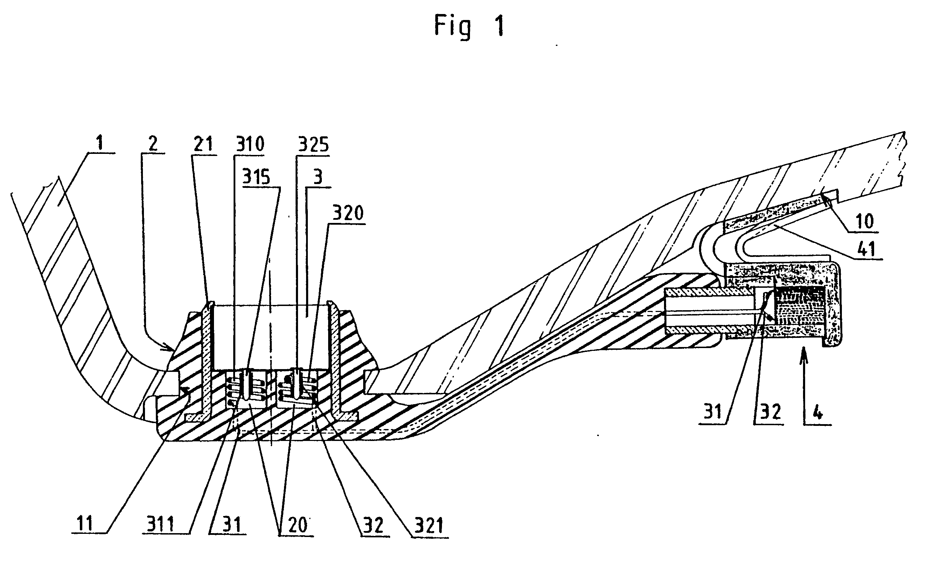

A la figure 1, on aperçoit partiellement une jante 1 dans le creux de laquelle est implanté un support 2. On a réalisé un perçage 11 à cette fin. Ce support 2 maintient un élément électrique 3 et assure la connexion électrique de celui-ci à une antenne 4 fixée radialement du côté intérieur de la jante 1, donc à l'extérieur de l'enceinte pneumatique et, dans le cas illustré, axialement du côté intérieur du véhicule.

L'antenne 4 illustrée est une bobine coaxiale par rapport à la jante 1. Elle est maintenue en place par des clips 41 s'engageant dans une rainure 10 prévue à cet effet sur la face radialement intérieure de la jante 1. Deux fils électriques 31 et 32 permettent de connecter l'antenne 4 à l'élément électrique 3. Celui-ci se présente sous la forme d'une capsule comportant tous les éléments qui doivent se trouver dans l'enceinte pneumatique pour en effectuer la surveillance. A titre d'exemple, il peut s'agir de circuits tels que décrits dans les demandes de brevets WO87/00127 et WO87/00129 réalisés sous forme de circuits intégrés et/ou hybrides permettant une miniaturisation importante. Il peut aussi s'agir de composants plus simples du genre des manocontacteurs. Le présent support 2 est donc conçu pour un élément électrique 3 se présentant sous la forme d'une capsule hors de laquelle font saillie au moins deux bornes 315, 325. Le nombre de bornes dépend bien sûr du type de circuit ou de composant(s) présents dans l'élément électrique 3.

Le support 2 se présente sous la forme d'une embase formant un joint d'étanchéité, réalisée en un matériau apte à conférer l'isolation électrique et surtout thermique requise par rapport à la jante 1, tout en ayant des propriétés mécaniques suffisantes pour maintenir l'élément électrique 3, sollicité par la pression interne de gonflage, par la force centrifuge due à la rotation du pneumatique et par toutes les accélérations dues aux chocs produits lors du roulage. On utilise par exemple du caoutchouc. D'un point de vue thermique et tout particulièrement si l'on désire mesurer la température régnant à l'intérieur du pneumatique, il est important que l'élément électrique 3 soit isolé de la jante 1 qui pourrait, sinon, fausser la mesure vers le bas (démarrage) ou vers le haut le plus souvent (chaleur dégagée par les freins). L'embase est ici renforcée par un insert métallique 21.

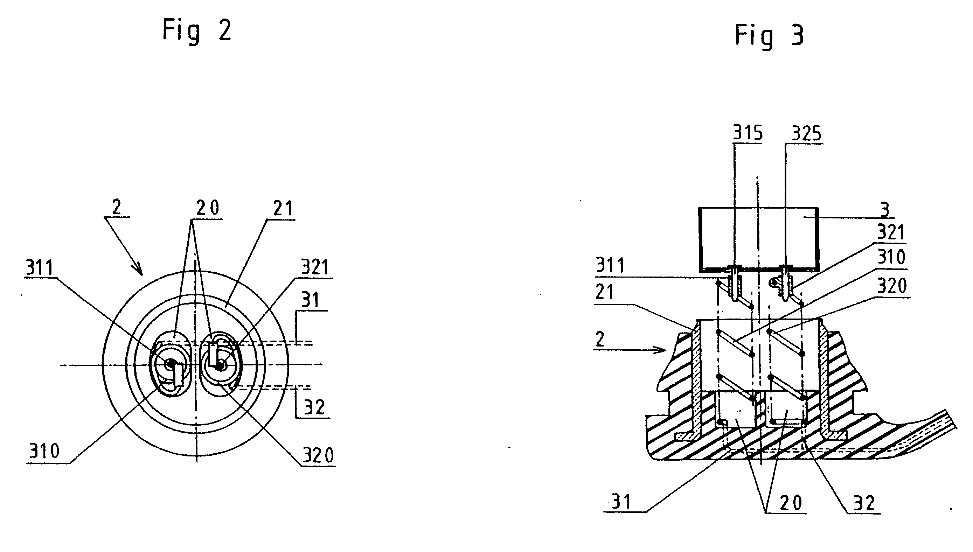

Pour assurer la ccnnexion électrique entre le support 2 et l'élément électrique 3, on prolonge chaque ligne électrique par une longueur de fil électrique suffisante pour permettre la connexion, de préférence par soudure, lorsque le support 2 et l'élément 3 sont séparés l'un de l'autre comme dans la configuration représentée à la figure 3. Le fil électrique doit être tel que, lorsque ledit élément est ensuite amené à sa position de montage sur le support 2, il se loge spontanément dans un évidement 20 aménagé à cet effet dans le support 2. A cette fin, l'extrémité du fil 31, 32 constitue un ressort 310, 320. De préférence, ce ressort est entièrement disposé dans ledit évidement, à l'état libre de toutes contraintes, et il se termine par une pièce de connexion 311, 321 de type femelle, recevant une borne 315, 325 dudit élément 3 pour établir une connexion provisoire permettant d'extraire la liaison ainsi constituée hors du support afin d'effectuer une soudure.

Le support 2 permet d'assurer la connexion électrique et l'étanchéité requises tout en ayant préparé séparément le support 2 et l'élément électrique 3 afin de ne pas soumettre celui-ci à des contraintes thermiques importantes. Le support 2 permet donc d'éviter de recourir au surmoulage d'un joint sur l'élément électrique 3.

## Revendications

1. Support (2) destiné à recevoir un élément électrique (3) comportant un ou plusieurs capteurs destinés à surveiller l'état d'un pneumatique, et à maintenir ledit élément électrique (3) sur la jante (1) en assurant l'étanchéité, l'isolation électrique et thermique par rapport à ladite jante (1), ledit support (2) comportant au moins deux lignes électriques (31, 32) de connexion vers des moyens de couplage (4) situés à l'extérieur de l'enceinte pneumatique, caractérisé en ce que, pour chaque ligne électrique :
   - il est prévu une longueur de fil électrique (310, 320) suffisante pour effectuer une connexion entre ledit fil électrique (310, 320) et un pôle (315, 325) dudit élément électrique (3) lorsque ledit élément électrique (3) et le support (2) sont écartés,
   - ledit support (2) comporte un évidement (20) dans lequel se loge spontanément la longueur de fil électrique (310, 320) excédentaire lorsque ledit élément électrique (3) est amené en position de montage sur ledit support (2).

2. Support selon la revendication 1, caractérisé en ce que ledit fil électrique est conformé en forme d'un ressort (310, 320) ayant, à l'état déployé, ladite longueur suffisante.

3. Support selon la revendication 2, caractérisé en ce que ledit ressort (310, 320) est ramassé dans ledit évidement (20) à l'état libre de toutes contraintes et en ce que ledit ressort (310, 320) se termine par une pièce de connexion de type femelle (311, 321), recevant une borne (315, 325) dudit élément électrique (3) pour établir une connexion provisoire permettant d'extraire la liaison ainsi constituée hors du support (2) afin d'effectuer une soudure.

## Claims

1. A support (2) for receiving an electric element (3) comprising at least one sensor for monitoring a condition of a tyre, and keeping said electric element (3) on the rim while assuring sealing, and electrical and thermal insulation relative to the rim (1), said support (2), incorporating at least two electric lines (31, 32) for connection to the coupling means (4) located outside of the pneumatic enclosure, characterized by the fact that, for each electrical line :
   - the electric line is provided with an excess length of electric wire (310, 320) sufficient to perform the connection between said electric wire (310, 320) and a terminal (315, 325) of said electric element (3) when the electric element (3) is moved aside from said support (2),
   - said support (2) defines a recess (20) whereby each said at least one wire (310, 320) is housed in one said recess when said electric element (3) is held in said support (2).

2. The support of claim 1, characterized by the fact that said electric wire consists of a spring (310, 320) having said sufficient length.

3. The support of claim 2, characterized by the fact that said spring (310, 320) is positioned in said recess (20) when in an unstressed state, and by the fact that said spring (310, 320) ends in a female type connecting part (311, 321) receiving a terminal (315, 325) of said electric element (3) to establish a temporary connection allowing to remove the connection thus made outside of said supports (2) to perform a soldering.

## Patentansprüche

1. Träger (2), der dazu bestimmt ist, ein elektrisches Element (3) aufzunehmen, das einen oder mehrere Aufnehmer aufweist, die dazu bestimmt sind, den Zustand eines Luftreifens zu überwachen und der dieses elektrische Element (3) auf der Felge (1) hält, wobei er die Dichtheit und die elektrische und thermische Isolierung bezüglich der Felge (1) sichert, dabei weist der Träger (2) zumindest zwei elektrische Verbindungsleitungen (31, 32) zu Kupplungsmitteln (4) auf, die außerhalb der Luftreifenhülle vorgesehen sind, dadurch gekennzeichnet, daß für jede einzelne elektrische Leitung:

- eine genügende Länge elektrischen Leiters (310, 320) vorgesehen ist, um eine Verbindung zwischen dem elektrischen Leiter (310, 320) und einem Pol (315, 325) des elektrischen Elementes (3) zu schaffen, wenn das elektrische Element (3) und der Träger (2) voneinander getrennt sind,
- der Träger (2) eine Ausnehmung (20) aufweist, in die sich die überschüssige Länge des elektrischen Leiters (310, 320) selbsttätig einbringt, wenn das elektrische Element (3) in seine Montagelage auf dem Träger (2) gebracht wird.

2. Träger nach Anspruch 1, dadurch gekennzeichnet, daß der elektrische Leiter die Form einer Feder (310, 320) hat, die im ausgezogenen Zustand genügend lang ist.

3. Träger nach Anspruch 2, dadurch gekennzeichnet, daß die Feder (310, 320) in der Ausnehmung (20) frei von allen Beanspruchungen untergebracht ist und dadurch, daß die Feder (310, 320) in einem weiblichen Verbindungsstück (311, 321) endet, das einen Pol (315, 325) des elektrischen Elementes (3) aufnimmt, um eine provisorische Verbindung zu bilden, die das Ausdehnen der so gebildeten Verbindung bis zum Träger (2) erlaubt, um hier eine Lötung durchzuführen.

# Fig 1

EP 0 289 883 B1

# Fig 2

# Fig 3

EP 0 289 883 B1